# EUROPEAN PATENT APPLICATION

(11) **EP 2 383 652 A1**
(43) Date of publication of application: **02.11.2011**
(21) Application number: 10250697.9
(22) Date of filing: 31.03.2010
(51) Int. Cl.: G06F 11/30

(54) **Performance monitoring for virtual machines**

(71) Applicant: British Telecommunications public limited company, London EC1A 7AJ (GB)
(72) Inventor: The designation of the inventor has not yet been filed
(74) Representative: Chan, Robin

(57) **Abstract**

A computer network monitoring controller for monitoring the performance of a plurality of virtual machines in a cloud computing environment, each virtual machine being a set of resources hosted on a hardware platform and arranged to appear as a real hardware to a client, the virtual machines being allocated and generated by a management system, the monitoring controller comprising: a plurality of interfaces, each one connected to a monitoring system having links to at least one of the virtual machines, and each monitoring system being arranged to capturing event messages relating to the status of the virtual machine and outputting these event messages in a monitoring system specific format; an data store for storing event messages received from each of the monitoring systems via the interfaces; a receiver for receiving monitoring requests from said management system, each request specifying monitoring requirements relating to at least one of the virtual machines; a converter for converting the messages from the monitoring systems into a common format for storage in the event log; a processor for processing the received requests and matching the requirements to event messages received from the plurality of virtual machines; and a sender for sending matched event messages to the management system in the common format.

## Description

The present invention relates to performance monitoring and in particular to performance monitoring of virtual machines in a cloud computing environment.

### Background

In recent years "cloud computing" has emerged as an alternative way of providing computing resources. In such a scheme a service provider owns computing power, storage and networking infrastructure and customers can purchase the right to use the resources of this cloud environment as a service. In this way it is not necessary for the customer to invest in the hardware and infrastructure themselves.

Cloud computing service providers use virtualisation technologies to provide virtual resources to the customers. Typically the agreement between the service provider and the customer is not for a discrete amount of hardware but instead on the basis of service level agreements. This is advantageous to the customers since they can receive consistent service that is reactive to the usage of the requested services. For example heavy usage of the service results in more instances of the virtual machines running the services being created.

The applicant has recognised that monitoring the performance of the cloud environment is desirable to the service provider and the customer. Improving the monitoring performance and capabilities is beneficial to the service providers since the monitoring data provides valuable information on the state of the virtual machines and the load applied to each one. This is useful for load balancing such as moving virtual machines to less loaded hardware or in the event of hardware failure. It can also be used to implement value added services, for example, the vendor can detect when a particular service is close to exceeding its resource load and then send a notification to the customer advising them to upgrade.

In one aspect, the present invention provides a computer network monitoring controller for monitoring the performance of a plurality of virtual machines in a cloud computing environment, each virtual machine being a set of resources hosted on a hardware platform and arranged to appear as a real hardware to a client, the virtual machines being allocated and generated by a management system, the monitoring controller comprising: a plurality of interfaces, each one connected to a monitoring system having links to at least one of the virtual machines, and each monitoring system being arranged to capturing event messages relating to the status of the virtual machine and outputting these event messages in a monitoring system specific format; an data store for storing event messages received from each of the monitoring systems via the interfaces; a receiver for receiving monitoring requests from said management system, each request specifying monitoring requirements relating to at least one of the virtual machines; a processor for processing the received requests and matching the requirements to event messages received from the plurality of virtual machines; and a sender for sending matched event messages to the management system in the common format.

Further aspects of the invention are set out in the dependent claims.

Embodiments of the present invention will now be described with reference to the following figures in which:
Figure 1 shows an overview of a cloud computing environment in the first embodiment of the invention including an event monitoring system;
Figure 2 shows an alternative functional view of the main components in the cloud computing environment illustrated in Figure 1;
Figure 3 shows the hardware structure of the event monitoring system illustrated in figures 1 and 2;
Figure 4 shows a functional view containing the functional components of the event monitoring system illustrated in figure 3;
Figure 5 is a flowchart showing the processing performed by a service provisioning component and the event monitoring system configuration module to create monitoring requests;
Figure 6 is a flowchart showing more detailed processing performed by the event monitoring system configuration module; and
Figure 7 is a flowchart showing the processing of components of the event monitoring system to analyse and process event notifications against a service level agreement.

### Description

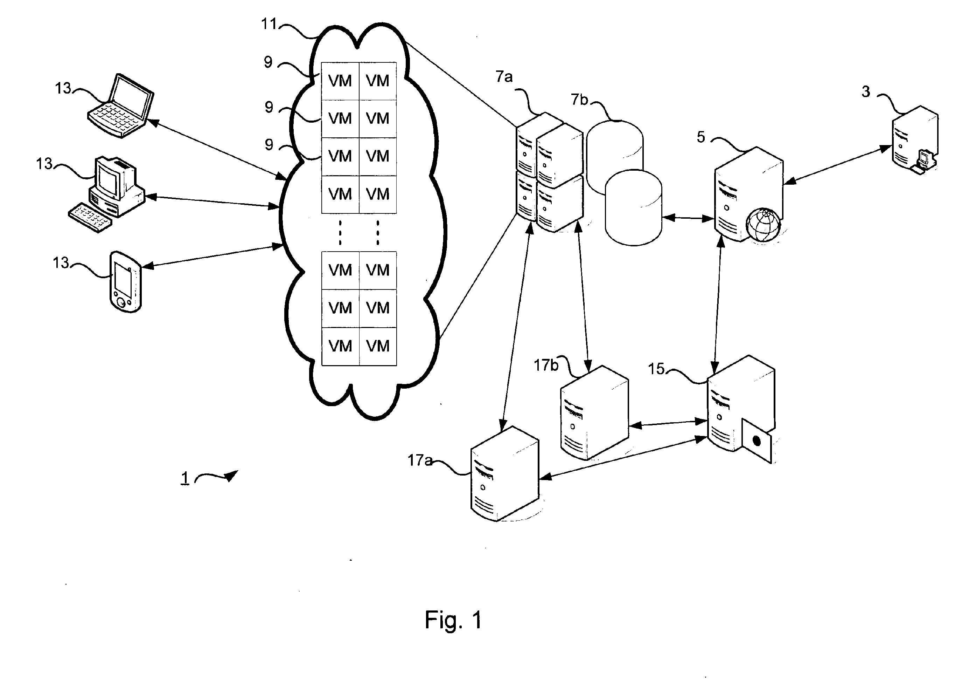

Figure 1 shows an overview of a cloud computing environment 1 in the first embodiment. The cloud computing environment 1 is owned and managed by a service provider. The service provider has a cloud computing manager 5 containing definitions of a number of services such as application servers which customers 3 can purchase for use. These services are implemented on a set of cloud computing resources 7 for hosting applications and services. The cloud computing resources 7 include a cluster of cloud processors 7a and cloud based storage 7b. The physical cloud resources 7 create a range of virtual machines 9 which reside on the cloud 11 and implement the services as cloud applications. These virtual machines 9 in the cloud 11 are accessed and utilised by user devices 13 belonging to the customer such as laptop computers, smartphones and Personal Digital Assistants (PDAs) to run remote applications.

In this embodiment, the cloud computing manager 5 and cloud computing resources provide a bundle of services known as LAMP comprising Linux, Apache HTTP server, MySQL and PHP to support application servers.

The cloud computing environment also includes an event monitoring system (EMS) 15 connected to a plurality of resource monitors 17. In this embodiment, the resource monitor runs Nagios 17a (http://www.nagios.org/) and the second resource monitor runs OpenNMS 17b (http://www.opennms.org/wiki/Main Page). However any number of resource monitors could be present in the cloud environment.

The resource monitors 17 are used to monitor the status and health of the virtual machines and the cloud computing resources 7 (processors 7a and cloud storage 7b) on which they run. In this embodiment, the EMS 15 co-ordinates the monitoring carried out by each resource monitor 17 and these monitoring systems are used by the EMS 15 to gather usage statistics and characteristics.

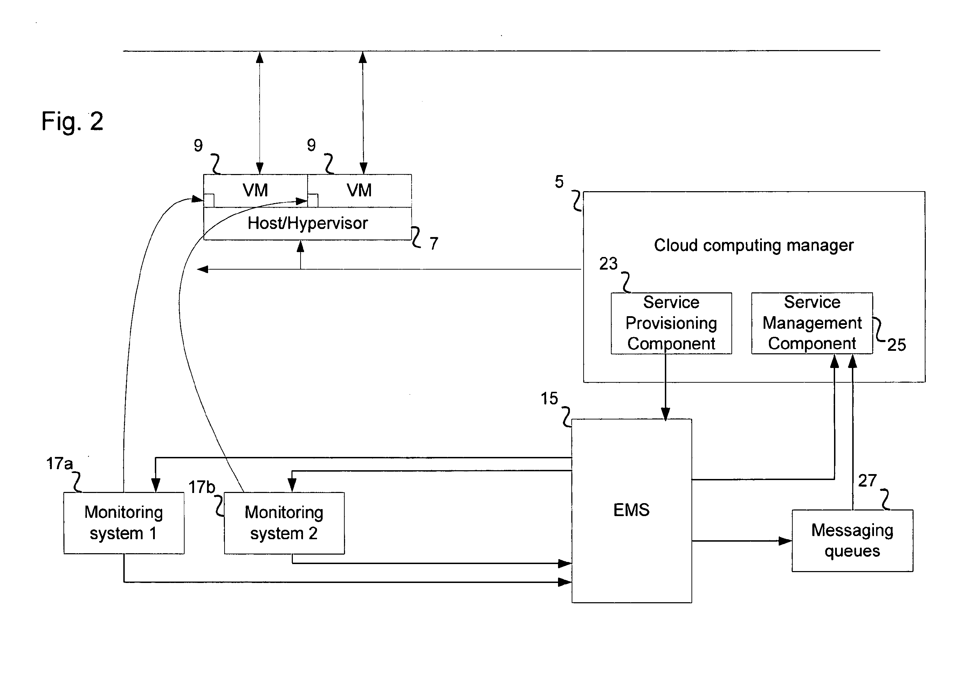

Figure 2 shows an alternative functional view of the system shown in Figure 1. As shown, the cloud computing manager 5 is connected via an internal network to cloud processors 7a and storage 7b which generate a plurality of virtual machines 9. Figure 2 also shows two functional components of the cloud computer manager 5 which are relevant to EMS 15 and the virtual machines. A service provisioning component 23 is responsible for instantiating new instances of the services offered by the service provider via the cloud computing manager 5.

Furthermore, the service provisioning component 15 is responsible sending monitoring requests to the EMS 15.

The customer and service provider typically have a contract called a Service Level Agreement (SLA) relating to a common understanding regarding service, priorities, responsibilities, guarantees and warrantees. Therefore, the service provisioning component 15 ensures that all of the monitoring requests are related to, and conform to, a defined SLA offered by the service provider.

As mentioned above, the EMS 15 receives these monitoring requests and converts them into a format that the individual resource monitors 17 can understand before sending them to the resource monitors 17. The EMS 15 also updates a database of subscribers so that EMS can send any received notification messages to the monitoring requester at a later time.

When the status of the monitored service changes, it is detected by the appropriate resource monitor 17 and an event notification message is sent to the EMS 15. The EMS processes the event notification, including any necessary format conversion, and delivers the notification to an appropriate subscriber based on the stored data base of subscribers. The messages are either delivered directly to a Service Management Component 25 or delivered via a queue 27.

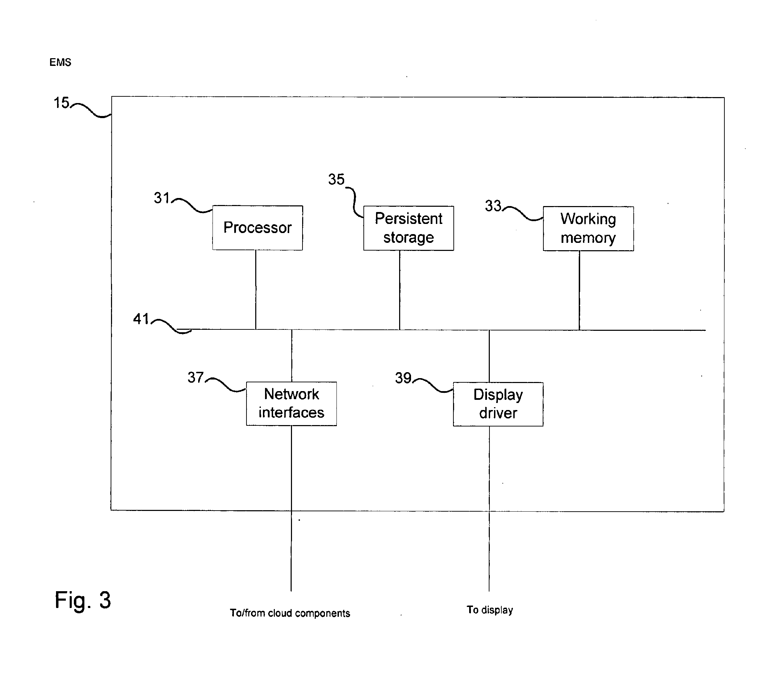

The structure of the EMS 15 will now be described with reference to Figure 3.

The EMS 15 contains a processor 31 for executing computer executable code stored in working memory 33 and persistent storage 35. The persistent storage 35 and working memory 33 also contain data tables setting out configuration data used by the executable code. The EMS 15 hardware further includes network interface 37 for communication with the resource monitors 17 and the service management component 25 of the cloud computing manager 5. Finally the EMS hardware includes a display driver 39 for outputting any graphical data onto a computer monitor screen (not shown). The components within the EMS are connected together via an internal data bus 41.

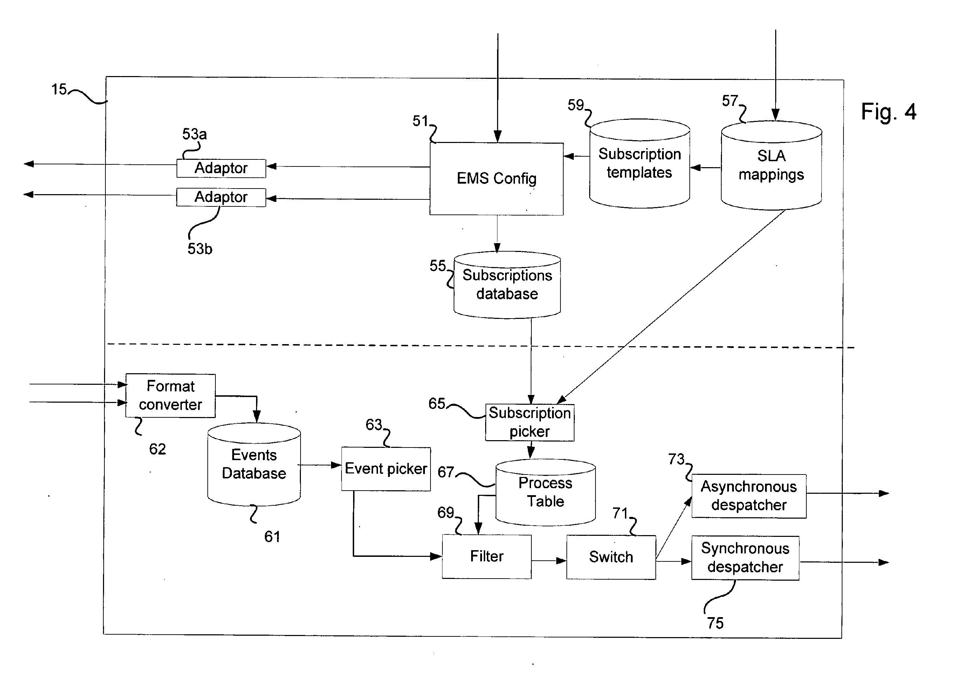

Figure 4 shows a functional view of the EMS 15 in which the software code stored in working memory 35 and persistent storage 33 is executing on the processor 31 to enable the hardware to function as an EMS 15.

The functionality of the EMS 15 can be split into two main parts: the processing to set up a resource monitor 17 in response to a monitoring request; and the processing of received event notifications.

### Set up monitoring

The overall purpose of the setup part of the EMS is to configure the resource monitors when a monitoring request is received. This part of the EMS 15 contains:
- an EMS configuration module 51;
- adaptors 53, each one corresponding to a specific resource monitor 17;
- a subscriptions database 55; and
- a Service Level Agreement (SLA) Mapping store 57.

The main functional component for this section is the EMS configuration module 51. This module provides three main functions. Firstly, the EMS configuration module 51 processes monitoring requests received from the service provisioning component 23 located within the cloud computing manager 5. Secondly it stores monitoring requests in the subscriptions database 55. Finally the EMS configuration module 51 converts and passes the parameters of the monitoring requests to the adaptors 53.

The EMS configuration module 51 retrieves monitoring requests from the SLA Mapping store 57. The SLA mapping store contains coded representations of the monitoring required for different services. In this embodiment, SLAs are defined using the eXtensible Markup Language (XML). The key feature of each monitoring specification is the name of the SLA against which the service was offered. It is the choice of SLA and the mapping for that SLA that determines what monitoring is set up and how the resulting monitoring output is processed.

The subscriptions database 55 stores all of the valid requests for monitoring after the EMS configuration module 51 has validated the monitoring requests against the subscription template. The EMS configuration module is also operable to modify the requests in the subscriptions database as will be described later.

The adaptors 53 serves to adapt the generic EMS format monitoring requests into the specific interface/model of the corresponding monitoring system 17. Each adaptor 53 contains configuration tables for the translation which can be extended as new SLA mappings are added to the EMS 15.

### Monitoring event processing

This part of the EMS is responsible for analysis and processing of event notifications before delivery to requesters in accordance with the subscriptions and SLA conditions established in the monitoring setup part of the EMS. This part of the EMS 15 includes:
- an events database 61;
- a message format converter 62
- an event picker 63;
- a subscription picker 65;
- a process table 67;
- a filter 69;
- a switch 71; and
- one or more delivery buffers 73 which may be synchronous or asynchronous.

The events database 61 receives and stores any event notification messages generated by the resource monitors 17. Since the events are being received from a variety of different hardware monitoring systems, the events database preferably also includes a format converter 62 for converting the received resource monitor 17 specific message formats such as NAGIOS 17a and OpenNMS 17b message formats into a predetermined common format.

For logging purposes, the events database stores all received event notifications. The event picker 63 periodically reads any new entries from the events database 61 and sends them to later components as will be described below. Event notifications may also be sent by the resource monitors directly into the later components with or without storage in the events database in parallel.

The subscription picker 65 monitors the subscriptions database 55 and pulls off active subscriptions into the process table 67. The process table 67 is a data structure held in working memory 35 and is optimised so that the filter component can process new events quickly. In this embodiment, the process table 67 uses hashtables inside hashtables to record how each event should be handled. However the skilled person would readily recognise that clearly other structures could be used. Furthermore, the subscription picker 65 consults the SLA mappings store 57 and updates the process table 67 so that each entry in the process table 67 also includes filter levels and priorities for each event type and the destination where qualifying events should be sent. This data along with a deployment ID and SLA are stored with entry.

In order to link event messages to subscriptions, the filter 69 receives new event notifications from event picker 63 and compares these notifications against the process table in order to decide what priority each event should be given and whether it should be forwarded or not.

Next, the switch 71 looks in the process table 67 and decides where messages should be dispatched to via a plurality of delivery mechanisms.

The groups of subscriber event messages are then sent to the delivery buffers 73 for despatch. These buffers may be configured to arrange synchronous or asynchronous deliver to the destination service management component 25. In this embodiment, synchronous dispatchers include XML over socket and SOAP call and asynchronous dispatchers include Java Message Service (JMS) or another messaging service.

### Operation

Now that the individual components have been described, the interactions of the components will now be described.

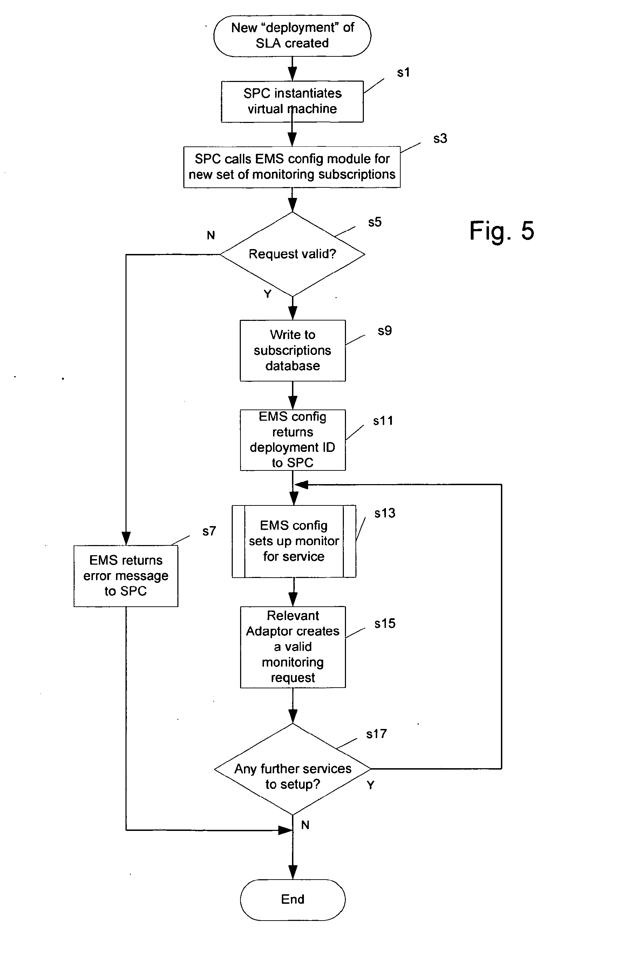

Figure 5 shows the processing of the components when a customer 3 of the service provider orders a software service. In step s1, in response to the new order, the service provisioning component 23 within the cloud computing controller 5 instantiates the relevant services specified in the order. To setup a monitor for the newly established service running on the instantiated virtual machine, in step s3, the service provisioning component 23 calls the EMS configuration module 51. In this embodiment, the service provisioning component 23 is configured to use a function called "CreateDeployment()". This function call to the EMS configuration module 15 includes:
- the name of the SLA corresponding to the instantiated service, for example, "LAMP Gold";
- resource definitions (explained below); and
- the destination of the monitored event notifications, e.g. the service management component 25.

Resource definitions provide information regarding the location of the new instantiated service to be monitored. An example resource definition for an instance of an ApacheHost service is provided below:

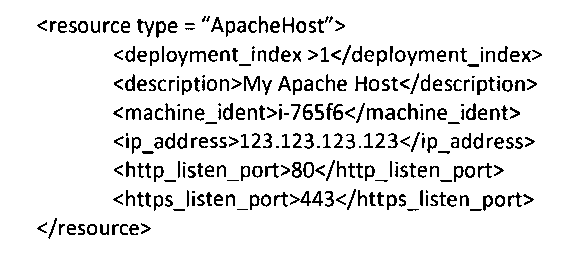

Upon reception of the new request and relevant setup information, in step s5 the EMS configuration module 51 checks whether the received command is a valid monitoring request. If it is not, the processing proceeds to step s7 in which an error message is returned to the service provisioning component 23.

If the EMS configuration module 51 finds that the command from the service provisioning component 23 is a valid command, then in step s9 an entry for the command is stored in the subscriptions database 55. In step s11, the EMS configuration module 51 returns a positive acknowledgement to the service provisioning component 23 including a deployment ID. This ID is used by the service provisioning component 23 when changes are made to the services and the monitoring information stored in the EMS 15 needs to be changed.

In step s13 the EMS configuration module 51 commences the process of setting up monitoring according to the monitor definitions for the specified SLA. This is stored in the SLA Mappings store 57.

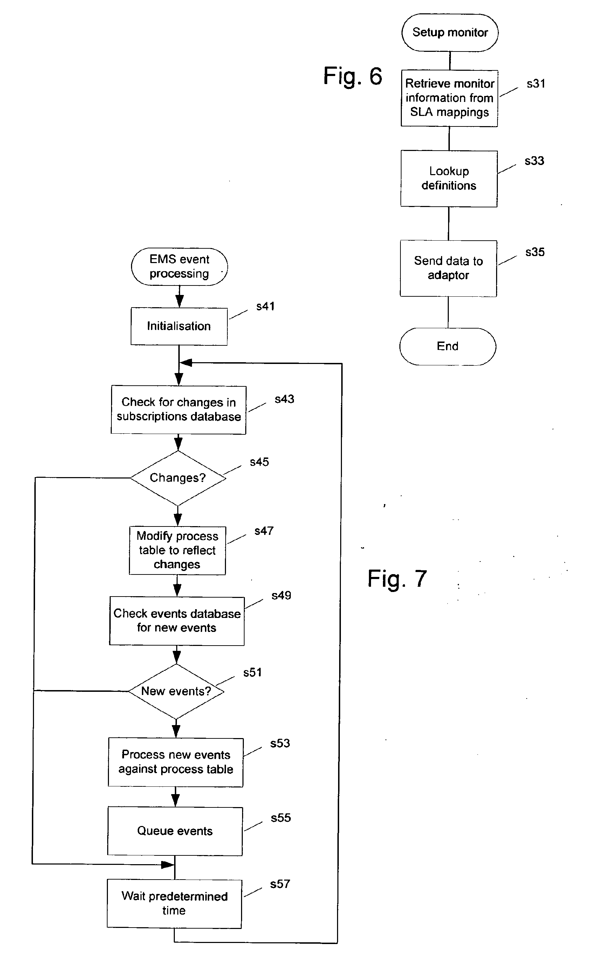

Figure 6 shows the processing performed by the EMS configuration module 51 to locate the necessary information for an appropriate adaptor of a resource monitor 17 to build a monitoring request by retrieving information stored in the various definitions. In step s31, the EMS configuration module 51 retrieves the monitor definition from the SLA Mapping store 57 and in step s33 the resource definitions and monitoring scheme definitions are retrieved.

Monitoring scheme definitions and monitor definitions are pre-defined by the service provider in accordance with the SLAs and the internal architecture of the cloud computing environment.

Monitoring scheme definitions provide information regarding the scheme and the resource monitor which provides monitoring for a particular service. Example definitions are provided below:

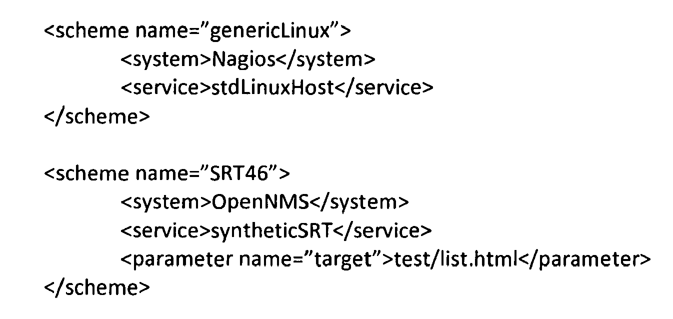

Monitor definitions are the definitions of the actual parameters of the monitoring requests. For example:

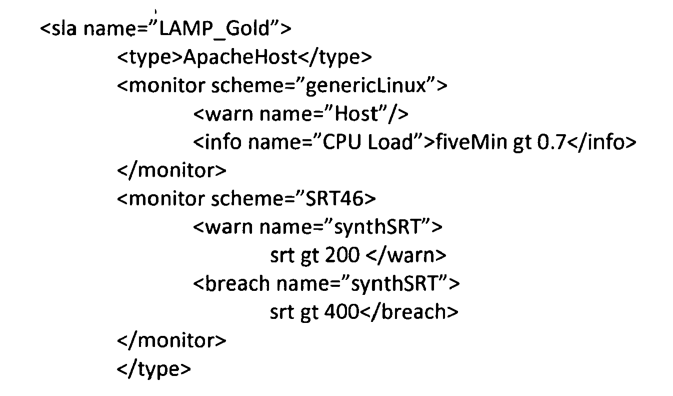

As described above, these three sources of information, a monitoring request can be described and in step s35 the EMS configuration module 51 sends details of the monitoring request to an appropriate adaptor as specified in the retrieve monitor scheme definition entry.

Returning to Figure 5, in step s15, the appropriate adaptor converts the EMS 15 standard language request into a specific monitoring request.

Using the received information from the EMS configuration module 51 described above, an example monitoring request could be:

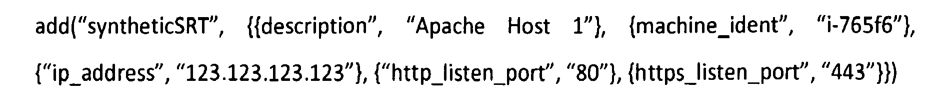

In step s17 the EMS configuration module 51 performs a check for other services which require monitoring. If more service monitoring requests are specified then processing returns to step s13. If no more services are required, then processing ends.

Using the above processing, the resources of services within the cloud network can be established. Furthermore, the EMS configuration module 51 can process service level agreements (SLAs) to determine what monitors are required to enable the calling entity to obtain metrics data to determine whether the SLA is being met. This reduces the burden on the requester to have intimate knowledge of the network architecture.

As explained earlier, in order to establish monitoring deployments, the service provisioning component 23 calls a createDeployment() function offered by an interface of the EMS configuration module 51. This interface is defined in an XML SOAP file stored at the EMS configuration module 51. In this embodiment, the interface provides four main functions:
- createDeployment();
- destroyDeployment()
- scaleUpDeployment(); and
- scaleDownDeployment().

As explained above, the createDeployment() function is called to create new monitoring requests against an SLA. The opposite function is destroyDeployment(). When a monitor is no longer required, the service provisioning component 23 calls the destroyDeployment() specifying the corresponding previously received deploymentID as a parameter. In response, the EMS configuration module 51 removes the monitoring request by marking the corresponding entry in the subscriptions database as dead. As explained earlier, the subscriptions database is a journal of all the monitoring activity which is useful for auditing purposes. Therefore the destroyed entry is marked dead instead of being removed. However, the subscription picker 65 is arranged to remove the corresponding entry in the process table 67 and the EMS configuration module 51 sends a message to the appropriate resource monitor 17 to remove the monitoring request.

The scaleUpDeployment() and scaleDownDeployment()functions are used by the service provisioning component 23 when there is a change in the service being offered to the customer 3, for example an increase or decrease in the number of application servers allocated to a particular service. When such a change occurs, it is desirable to also monitor these instances or stop monitoring instance which no longer exist.

When the scaleUpDeployment() function is called, the service provisioning component includes the deploymentID and resource definitions for the new instance. In response, the EMS configuration module 51 performs similar processing to steps s5 to s17 as in the createDeployment() function, namely writing the new information to the subscriptions database, returning a notification to the service provisioning component 23 and setting up a new monitor request to the appropriate monitoring resource.

When the scaleDownDeployment() function is called, the service provisioning component 23 includes the deploymentID and the name of instance which does not need to be monitored, i.e. the identifier in machine_ident of the resource definition. In response the EMS configuration module 51 checks the validity of the command, updates the subscriptions database and sends a message to the appropriate adaptor to remove the monitoring request.

Having described the operations to create and maintain monitoring requests with the resource monitors 17, the operation of the event processing part of the EMS 15 will now be described.

### Event processing operation

Figure 7 shows the operational flow of the event processing part of the EMS 15, in particular involving the subscription picker 65, the event picker 63, the filter 69 and the switch 71.

In step s41, as an initialisation step, the process table 67 is populated by the subscriptions picker 65 with details from the subscriptions database 55 and the SLA mappings store 57. This process table 67 contains a subset of the data in the subscriptions database, namely only the active subscriptions. The entry for each active subscription is then supplemented with data from the SLA mappings store 57, for example the priority of each event and the output destination.

In step s43 the subscriptions database 55 is examined by the subscription picker 65 to check if there have been any changes. There are unlikely to be any changes straight after initialisation in step s41 but as described below, subsequent iterations of the process loop may result in enough time passing that there are changes to the subscriptions database 55 due to function calls from the service provisioning component 23 on EMS configuration module 51.

If there are no changes detected in step s45, then processing proceeds to step s57 where the four processing components wait a predetermined amount of time before looping back to step s43. In this embodiment, step s57 lasts for 60 seconds but it is reconfigurable.

If there are changes detected in step s45 then in step s47, the subscriptions picker modifies the process table 67 to reflect the changes. This includes adding new subscriptions and also removing dead subscriptions.

In this embodiment, events generated by the resource monitors are received into the events database 61. This process occurs asynchronously to the rest of the EMS 15.

The events received into the events database 61 include at least the following information:
- a timestamp;
- a type identifier (host event or service event);
- a hostname or resource name, e.g. i-765f6;
- a service identifier: monitoring service, e.g. CPU load, disk space, memory, host or processes;
- a state: e.g. OK, WARNING, CRITICAL;
- an output value (of the monitoring check), e.g. CPU load: 0.47, 0.32, 0.22;
- a resource monitor identifier, e.g. Nagios; and
- a unique id.

In step s49 the event picker 63 checks for new events in the events database 61 and in step s51 if it is determined that there are no new events, the processing moves to step s57 where the components have a predetermined wait time.

If step s51 determines that new events are detected, then in step s53 the filter 69 checks each new event against the process table 67 which determines whether the event is required for a particular SLA, and if so, its priority. The filter 69 assigns a priority the switch 71 assigns the destination.

In step s55 the dispatcher 73 queues the events for delivery to the recipient process of the events such as service management component 25 and in step s57 the components wait a predetermined time before steps s43 to s57 are repeated.

As shown above, the event processing system (EMS) 15 in the cloud computing environment enables the performance of cloud computing resources such as services to be monitored and compared against service level agreements. This additional processing provides the recipients of such monitoring data to more easily manage the instances of offered services. In particular reacting to changes in the status of the virtual machines to handle failover, scale up, scale down etc.

### Alternatives and Modifications

In the first embodiment, when the service provisioning component called the EMS configuration module to create a new monitoring request against an SLA, the EMS configuration module consulted the SLA mappings store.

In an alternative, the EMS further includes a subscriptions template store having templates derived from the SLA mappings held in the SLA Mappings store. These templates are simplified templates which determine what constitutes a valid request on the EMS configuration module. For example, if a service provisioning component requests monitoring against an unknown SLA, the request will be refused. Similarly, if a service provisioning component requests monitoring of a LAMP service but doesn't provide details of a database when the SLA mapping indicates that one is required, then the request is rejected.

In the first embodiment, the EMS 15 monitored services offered by the service provider which owned the cloud computing manager 5 and resources 7 within the cloud computing environment 1. Customers 3 then bought instances of these services under service level agreements within such an Infrastructure as a Service architecture.

The skilled person will appreciate that the EMS is equally applicable to other cloud computing architectures such as Platform as a Service (PaaS) and Software as a Service (SaaS).

In an alternative, the service provider hosts software developed by a third party software publisher. The software publisher then offers their software as a service to end customers under similar SLAs. Although the software publisher is not part of the cloud computing environment "core" it is desirable for them to have access to the same monitoring service offered by the event monitoring system rather than dealing directly with the resource monitors. In addition to the advantages offered by EMS in processing received events against any SLAs, a further advantage is that the software publisher only needs to have one interface to the EMS instead of separate interfaces to each resource monitor. In such an alternative, the software publisher must provide the necessary monitoring definitions to the EMS and the EMS is modified so that it can receive data from, and send event data to the software publisher.

## Claims

1. A computer network monitoring controller for monitoring the performance of a plurality of virtual machines in a cloud computing environment, each virtual machine being a set of resources hosted on a hardware platform and arranged to appear as a real hardware to a client, the virtual machines being allocated and generated by a management system, the monitoring controller comprising:
a plurality of interfaces, each one connected to a monitoring system having links to at least one of the virtual machines, and each monitoring system being arranged to capturing event messages relating to the status of the virtual machine and outputting these event messages in a monitoring system specific format;
an event data store for storing event messages received from each of the monitoring systems via the interfaces;
a receiver for receiving monitoring requests from said management system, each request specifying monitoring requirements relating to at least one of the virtual machines;
a processor for processing the received requests and matching the requirements to event messages received from the plurality of virtual machines; and
a sender for sending matched event messages to the management system in the common format.

2. A computer network monitoring controller according to claim 1, further comprising a service level agreement store storing at least one service level agreement, wherein the received monitoring processor is arranged to process event messages in accordance with a set of conditions within said service level agreement.

3. A computer network monitoring controller according to claim 2, wherein the receiver validates the requests against conditions set out in a service level agreement within the service level agreement store.

4. A computer network monitoring controller according to claim 2 or 3, wherein the processor determines a priority for each of the event messages in accordance with said service level agreement.

5. A computer network monitoring controller according to any preceding claim, wherein the receiver is further operable to receive monitoring requests from a third party software developer, and the sender is operable to send data to the third party software developer via the management system.

6. A computer network monitoring controller according to any preceding claim, further comprising a subscriptions data store for storing received monitoring requests; and a process table for storing a subset of the monitoring requests,
wherein the subscriptions data store contains all received monitoring requests and is operable to determine active and disabled requests; and
the process table contains only active monitoring requests.

7. A computer network monitoring controller according to claim 6, wherein the process table also contains service level agreement information.

8. A computer network monitoring controller according to any preceding claim, wherein the receiver is further arranged to receive requests to alter the monitoring requirements.

9. A computer network monitoring controller according to any preceding claim, further comprising a converter for converting the messages from the monitoring systems into a common format for storage in the event data store.
